# EUROPÄISCHE PATENTSCHRIFT

(11) **EP 0 899 497 B1**
(45) Veröffentlichungstag und Bekanntmachung des Hinweises auf die Patenterteilung: **19.12.2001**
(21) Anmeldenummer: 98114688.9
(22) Anmeldetag: 05.08.1998
(51) Int. Cl.: F16L 33/22

(54) **Anschlussverschraubung für Saug-Druck-Schläuche**
Screwed connection for suction pressure hoses
Raccord à vis pour tuyaux souples à pression d'aspiration

(30) Priorität: 28.08.1997 DE 19737554
(43) Veröffentlichungstag der Anmeldung: 03.03.1999
(73) Patentinhaber: Renus Armaturen GmbH, 63674 Altenstadt (DE)
(72) Erfinder: Kurz, Reinhard, 61130 Nidderau (DE)
(74) Vertreter: Wolf, Günter, Dipl.-Ing.

(56) Entgegenhaltungen:
- EP-A- 0 222 051
- DE-C- 19 634 037
- DE-U- 1 824 206
- DE-U- 29 702 045
- US-A- 3 167 331

## Beschreibung

Die Erfindung betrifft eine Schlauchanschlußverschraubung für Saug-Druck-Schläuche, in deren elastischem Wandungsmaterial eine schraubenlinienförmige Stützbewehrung aus in Bezug auf das Schlauch-Wandungsmaterial härterem Material eingebunden ist.

Derartige Saug-Druck-Schläuche, die auch als Industrieschläuche bezeichnet werden, bereiten, was ihre feste und dichte Verbindung mit Schlauchanschlußverschraubungen betrifft, beträchtliche Schwierigkeiten, die durch ihre spezielle Konstruktion bedingt sind. Durch die eingebundene, sich schraubenlinienförmig in der Schlauchwandung entsprechende Stützbewehrung, die den vorgegebenen Strömungsquerschnitt des Schlauches auch bei angelegtem Unterdruck aufrechterhält, ist die Schlauchwandung im Bereich der Bewehrungsgänge wesentlich dünner als das sich zwischen den Schraubengängen befindliche Wandungsmaterial, das heute in der Regel aus mehr oder weniger steif eingestelltem Kunststoff besteht. Die Innenumfangsfläche solcher Schläuche ist dabei in der Regel zylindrisch bzw. angenähert zylindrisch glatt, während sich die Stützbewehrung auf der Außenumfangsfläche der Schläuche ziemlich stark abzeichnet.

Es ist bekannt, solche "Spezial-Schläuche" wegen ihrer Wandstruktur mit einfachen Schlauchschellen an sogenannten Schlauchanschlußnippeln festzulegen. Da, radial gesehen, das eigentliche Schlauchmaterial über und unter der Stützbewehrung in bezug auf die Gesamtwandstärke des Schlauches relativ dünn ist, unterliegen diese Bereiche beim Festspannen mit einer Schlauchschelle einer extremen Belastung, die früher oder später zu Beschädigungen der Schlauchwandung führen kann, und zwar mit der häufig zu beobachtenden Folge zumindest des Undichtwerdens der Verbindung zwischen Schlauch und Nippel. Abgesehen davon ist zu berücksichtigen, daß die harte Stützbewehrung das Festspannen einer an- bzw. umgelegten Schlauchschelle einschränkt, d.h., das sich zwischen den Stützbewehrungsgängen befindliche, wesentlich elastischere Schlauchmaterial kann nur im begrenzten Maße von der Schlauchschelle gegen die Schlauchtülle gepreßt werden. Auch von daher gesehen ist allein schon die Druckbelastbarkeit einer solchen Schlauchverbindung begrenzt. Hinzu kommt noch, daß in manchen Fällen das Kunststoffmaterial derartige Saug-Druck-Schläuche, um deren Biegsamkeit zu erhöhen, mittlerweile wesentlich weicher eingestellt wurde, was die Problematik eines dichten Anschlusses an ein Schlauchanschlußnippel noch weiter erschwert. Außerdem ist damit die vorerwähnte Beschädigungsgefahr erhöht.

Diese sich bei solchen "Spezialschläuchen" ergebende Problematik ist auch schon mit einer Schlauchanschlußverschraubung nach der EP-A-0222051 zu lösen versucht worden, und zwar mit einem per Innenkonus gegen Schlauch und Tülle klauenartig zusammenpreßbaren in einem Anschlußteil mit Schlauchanschlußnippel und einer aufschraubbaren Überwurfhülse angeordneten Einsatz, der an seinen radial zusammendrückbaren Enden jeweils an den Klauen zwei der Steigung der Schlauchbewehrung entsprechende "Positivgänge" aufweist, die sich in die äußere Gangstruktur des Schlauches einsetzen und den Schlauch gegen eine am Schlauchaufschubnippel umlaufend angeordnete, elastische Dichtung pressen. Inwieweit dies tatsächlich zu einer befriedigenden Festlegung und Abdichtung des Schlauches am Nippel führt, mag dahingestellt bleiben, nachteilig ist diese Lösung insofern, als die vorerwähnten Positivgänge mit der Steigung der Bewehrung im Schlauch und letztlich auch mit der Außenprofilierung des Schlauches übereinstimmen müssen, da bei nicht übereinstimmender Profilierung einerseits der Positivgänge und andererseits des Schlauches im hohem Maße Beschädigungsgefahr gegeben ist.

Mit anderen Worten führt dies dazu, daß solche Schlauchanschlußverschraubungen letztlich immer nur für einen Schlauch mit passender Bewehrungssteigung und passender Außenprofilierung geeignet ist. Außerdem muß das überwurfmutterartige Verschraubungsteil beim Anbringen und auch Lösen des Schlauchendes nachteilig vollständig gelöst und auf das Schlauchende geschoben werden, das dann mit dem bei Aufspreizung der Klauen des Einsatzes aufgesteckten Nippel in das eigentliche Anschlußteil eingesetzt wird und dann erst mit dem überwurfmutterartigen, mit Innenkonus versehenen Verschraubungsteil am eigentlichen Anschlußteil bzw. Nippel durch Aufschrauben festgelegt werden kann.

Vor diesem Hintergrund liegt der Erfindung die Aufgabe zugrunde, diese Nachteile zu beheben, d.h., eine Schlauchanschlußverschraubung für solche mit schraubenlinienförmig verlaufenden Innenbewehrungen versehene "Spezialschläuche" zu schaffen, mit der derartige Schläuche unabhängig vom Verlauf ihrer Innenbewehrung sicher, dicht und, vom Spannelement her gesehen, schonend am Schlauchaufschubnippel fixierbar sind, verbunden mit der Maßgabe, das mit der Anschlußverschraubung zu verbindende Schlauchende in diese einführen zu können, ohne die Verschraubungshülse vom Anschlußteil lösen zu müssen.

Diese Aufgabe ist mit einer Schlauchanschlußverschraubung durch die im Patentanspruch 1 in Kombination angegebenen Merkmale gelöst. Vorteilhafte Weiterbildungen ergeben sich nach den Unteransprüchen.

Diese erfindungsgemäße Lösung führt zu den Vorteilen, daß eine solche Schlauchanschlußverschraubung für dimensionsentsprechend gleiche aber hinsichtlich der Steigung und gegf. auch ihres Bewehrungsquerschnittes unterschiedliche Saug-Druckschläuche verwendet werden kann und daß bspw. im Gegensatz zur Schlauchanschlußverschraubung nach der EP-A-0222051 das Schlauchende lediglich in die Schlauchanschlußverschraubung einfach einzuschieben und dann mit der Schraubhülse festzuspannen ist, die dabei auch beim Einschubvorgang grundsätzlich in Schraubverbindung mit dem Anschlußteil steht.

Die Verwendung von Ringfedern, d.h., von zu einen Ring endlos gemachten Schraubenfedern in funktioneller Verbindung mit einem sie radial reduzierenden Innenkonus ist an Schlauchanschlußverschraubungen zwar bekannt, dies aber nur für "Normalschläuche", d.h., solchen ohne Stützbewehrung. Versuche mit solchen bekannten Anschlußverschraubungen an mit Stützbewehrung versehenen Schläuchen, davon ausgehend, daß damit eine schellenfreie, sichere und dichte Anbindung auch von Spezialschläuche ebenfalls herzustellen sei, führten jedoch zu keinen befriedigenden Ergebnissen, da damit Dichtheit solcher Spezialschläuche am Nippel nicht zu erreichen ist. Verwiesen sei hierzu auf eine Schlauchanschlußverschraubung bspw. nach DE-U 1 824 206, die mit einer Ringfeder ausgestattet ist.

Mit der erfindungsgemäßen Kombination aus einer gezielt für den vorliegenden Spezialfall als Andruckelement ausgewählten, radial reduzierbaren Ringfeder mit einem elastischen Widerlager bzw. Dichtung am Schlauchaufschubnippel im Anpreßbereich der Ringfeder ist der Forderung nach beschädigungsfreier und dichter Anbindung solcher Schläuche genügt und dies sogar bei höher als bisher anlegbaren Drücken von ca. 6-7 bar. Dieser Erfolg ist dadurch bedingt, daß sich einerseits die Ringfeder an die durch die schraubenlinienförmige Stützbewehrung gegebene "Unebenheit" an der Kreuzungsstelle (wird noch erläutert) anpaßt, die Stützbewehrung aber andererseits am elastischen Dichtungswiderlager des Nippels ebenfalls bis zu einem gewissen Grade ausweichen kann, wobei darauf hinzuweisen ist, daß sich diese Anpassungen nur in Zehntelmillimeterbereichen abspielen. Wesentlich ist dabei auch, daß das Widerlager, d.h. die elastische Dichtung oder statt dieser bevorzugt mehrere O-Ringe am Nippel dessen Umfangsfläche etwas überragt und am Nippel und/oder an der elastischen Dichtung Schlauchaufschuberleichterungsmittel angeordnet sind, die noch näher erläutert werden. Diese Mittel sind insofern wichtig, als damit einerseits der Nippelaußendurchmesser schon für einen relativ straffen Aufschiebesitz des Schlauches bemessen werden kann, andererseits aber dafür gesorgt ist, daß der Schlauch überhaupt über die elastische Dichtung, ohne diese aus ihrer Nut zu drücken, geschoben werden kann, wofür im übrigen geeignete und handelserhältliche Gleitmittel zusätzlich zu Hilfe genommen werden können.

Die ganze erfindungsgemäße Schlauchanschlußverschraubung ist in Bezug auf den anzuschließenden Schlauch also so gestaltet, daß schon nach dem Aufschieben des Schlauches auf den Nippel und dessen elastische Dichtung, d.h., ohne die Ringfeder überhaupt in Spannstellung zu bringen, schon ein gewisser Dichtungsdruck zwischen Schlauch und elastischer Dichtung entsteht bzw. vorliegt. Wesentlich ist auch die Anordnung eines Schlauchaufschubkonus am schlauchaufschubfernen Ende des Schlauchaufschubnippels, der, was noch näher erläutert wird, mit zum schonenden Anlegen der Ringfeder am Schlauch beiträgt.

Die erfindungsgemäße Schlauchanschlußverschraubung und deren vorteilhaften und bevorzugten Weiterbildungen werden nachfolgend an Hand der zeichnerischen Darstellung von Ausführungsbeispielen näher erläutert.

Es zeigt
- Fig. 1: einen Schnitt durch die Wand eines eine Stützbewehrung aufweisenden Saug- Druck-Schlauches;
- Fig.2: einen Teilschnitt durch die Schlauchanschlußverschraubung mit eingeschobenem Schlauchende;
- Fig. 3: stark vergrößert im Teilschnitt die Ausführungsform eines Schlauchanschlußnippels für die Schlauchanschlußverschraubung gemäß Fig. 2;
- Fig. 4: stark vergrößert und im Teilschnitt eine bevorzugte Ausführungsform des Schlauchanschlußnippels für die Schlauchanschlußverschraubung gemäß Fig. 2;
- Fig. 5: stark vergrößert und schematisch die Überschneidungsstelle von Ringfeder und Stützbewehrung und
- Fig.6: extrem vergrößert die Aufschubsituation eines Saug-Druck- Schlauches am Schlauchaufschubnippel.

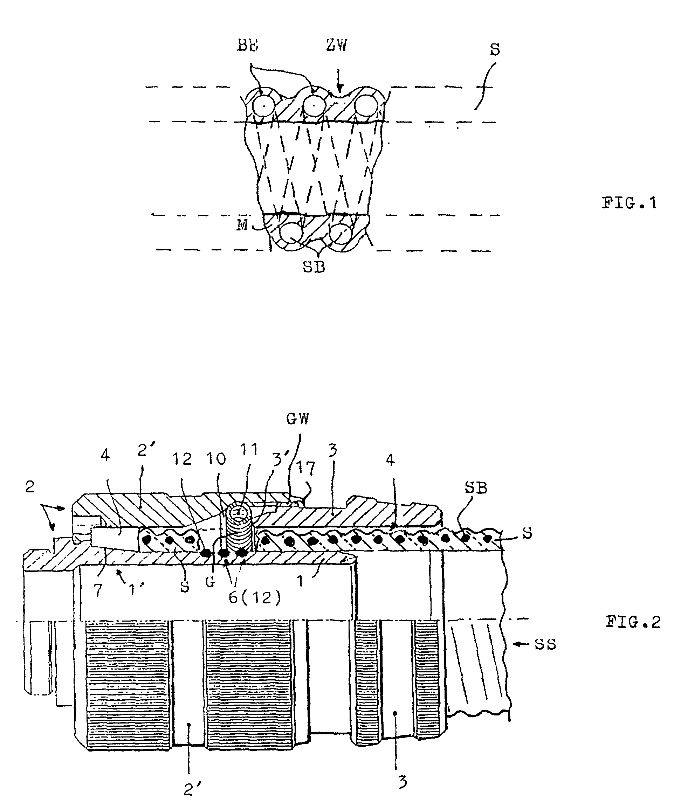

Um zu verdeutlichen, was hier unter einem mit Stützbewehrung versehenen Saug-Druck-Schlauch S zu verstehen ist, wird auf Fig. 1 verwiesen, in der die Stützbewehrung mit SB bezeichnet ist und das eigentliche Wandmaterial des Schlauches mit M. Außerdem sind die einer Beschädigungsgefährdung insbesondere unterliegenden Stellen mit BE bezeichnet und die Zwischenbereiche zwischen den Stützbewehrungsgängen mit ZW.

Was eine mögliche konkrete Ausführungsform der Schlauchanschlußverschraubung gemäß Fig. 2 betrifft, so besteht diese aus einem in das Schlauchende einsteckbaren Schlauchaufschubnippel 1, dessen Endbereich 1' konzentrisch mit einer einen Teil eines Schlaucheinschubringraumes 4 begrenzenden Hülse 2' umgeben ist, und aus einer mit dieser Hülse 2' durch Gewinde GW, wie bspw. dargestellt, verschraubbaren Schraubhülse 3, die zusammen mit der Hülse 2' und dem Nippel 1 den ringzylindrischen Schlaucheinschubringraum 4 begrenzt. In einem von einem Innenkonus 9 begrenzten Ringraum 10 ist zwischen Hülse 2' und Schraubhülse 3 im Bereich gegenüber einer am Nippel 1 umlaufenden Nut 5 eine Ringfeder 11 angeordnet, einer Feder also, die einer endlos gemachten Schraubendruckfeder entspricht. Das hier als Anschlußteil 2 bezeichnete Element der Anschlußverschraubung besteht also aus der Hülse 2' mit dem Schlauchanschlußnippel 1 in der bspw. dargestellten Form.

Die divergierende Orientierung des Innenkonus 9 zur Schlaucheinschubseite SS hin hat funktionell zur Folge, daß die Ringfeder 11 bei ihrer Durchmesserreduktion durch den Innenkonus 9 beim Einschrauben der Schraubhülse 3 auch eine gewissen Verschiebung in axialer Richtung erfährt. Dies ist im übrigen der Grund für die Maßgabe der Breitenbemessung der elastischen Dichtung 6 oder von stattdessen bevorzugt verwendeter O-Ringe 12. Diese axiale Verschiebung in Verbindung mit der Durchmesserreduzierung der Ringfeder 11 sorgt dabei für ein sanftes, d.h., schonendes und nicht nur direkt radiales Anpressen der Ringfeder 11 an den Schlauch S, was der Fall wäre, wenn sich der Innenkonus 9 an der Schraubhülse 3 befände.

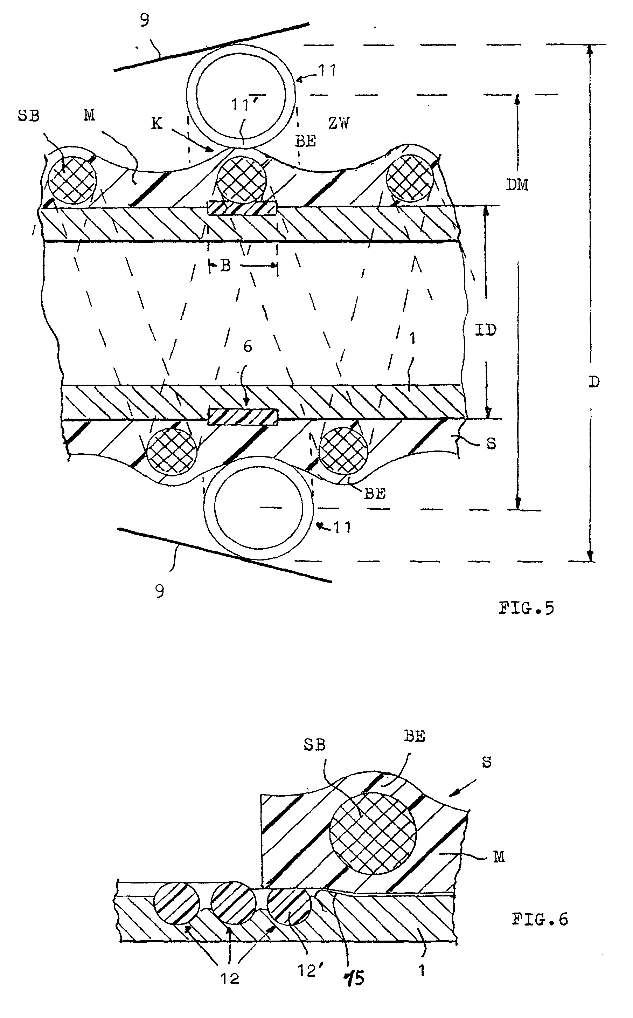

Wenn der am Nippel 1 aufgeschobene Schlauch S in einer Gestaltung gemäß Fig. 1 mit der via Innenkonus 9 durchmesserreduzierten Ringfeder 11 festgespannt ist, so ergibt sich zwischen dem mit Stützbewehrung SB versehenen Schlauch S und dem mit der elastischen, ringförmigen Dichtung 6 versehenen Nippel 1 die in Fig. 5 stark vergrößert dargestellte Situation, wobei der obere Teil der Fig. 5 die kritische Kreuzungsstelle K verdeutlicht, nämlich die Kreuzungsstelle K von Ringfeder 11 und Stützbewehrung SB im Schlauch S. Wenn die elastische Dichtung 6 am Nippel 1 nicht vorhanden wäre, würde der dünne, beschädigungsgefährdete Bereich BE der Schlauchwandung an der Kreuzungsstelle bei Durchmesserreduzierung der Ringfeder 11 extrem belastet und könnte dadurch beschädigt werden, und zwar mit der Folge, daß der Schlauch von dieser Stelle aus zu reißen beginnt und schließlich platzt bzw. undicht wird. Da sich solche Schläuche S bei entsprechender Druckbelastung auch in axialer Richtung in Abhängigkeit von der Elastizität des Wandmaterials M mehr oder weniger stark ausdehnen können, genügen schon geringe Beschädigungen an der Kreuzungsstelle, um Anrisse sich fortsetzen zu lassen.

Wie sich gezeigt hat, ist solchen Beschädigungen zufriedenstellend zu begegnen, und zwar zum einen per se durch die Wahl einer an sich bekannten Ringfeder 11 als Anpreß-bzw. Spannelement, deren untere Gangbereiche 11' in Spannstellung den Schlauch S mit nur noch geringen Gangabständen vollständig umfassen und die dank ihrer Rundung per se nicht zum Einschneiden neigen. Hinzu kommt noch, daß unter dem Kreuzungsbereich die elastische Dichtung 6 für eine gewisse Nachgiebigkeit sorgt, d.h. die Stützbewehrung SB kann bis zu einem gewissen Grad radial nach innen, d.h., zum Nippel 1 hin ausweichen, da der Nippel 1 im Wirkbereich der Ringfeder 11 keinen massiven Widerstand mehr bietet. Außerdem können sich die an der Kreuzungsstelle K beteiligten Gänge G der Ringfeder 11 bei entsprechender Gesamtdurchmesserreduzierung in sich etwas elliptisch deformieren, wobei aber ansonsten die Gesamtdurchmesserreduzierung (also bzgl. des Durchmessers D) soweit geht, daß in den beidseitig (senkrecht zur Darstellungsebene in Fig.5 gesehen) sich anschließenden Zwischenbereichen ZW des Schlauches S eine dichte Anpressung des Wandmaterials M an die elastische Dichtung 6 erfolgt. All dies bewegt sich, wie erwähnt, in Zehntelmillimeterbereichen.

Wesentlich ist beim Ganzen auch, daß die elastische Dichtung 6 die Umfangsfläche F des Nippels 1 etwas überragt, da sich sonst der betreffende Gang der Stützbewehrung SB auf den zur Nut 5 benachbarten Rändern der Umfangsfläche 11 abstützen würde und nicht weiter nachgeben könnte. Die Maßgabe des geringfügigen Überragens hat außerdem den Zweck, daß die Dichtung 6 beim Aufschieben des Schlauches nicht aus ihrer Nut 5 herausgedrückt werden kann, was eine Abdichtung per se in Frage stellen würde. Ein bspw. zwei Millimeter starke, ringförmige Dichtung 6 würde also bspw. mit nur o,6-o,8 mm die Umfangsfläche F des Nippels 1 überragen.

Als bezüglich des Schlauchaufschubes vorteilhaft hat sich außerdem eine Ausbildung dahingehend erwiesen, daß unmittelbar vor der Nut 5 eine umlaufende, kleine, hier sogenannte Schlauchaufschubrampe 15 als Aufschuberleichterungselement angeordnet ist, deren maximaler Außendurchmesser kleiner ist als der Außendurchmesser der elastischen Dichtung 6. Bezüglich einer solchen kleinen Aufschubrampe 15 wird auf Fig.4, 5 verwiesen. Ebenfalls als "Mittel zur Aufschuberleichterung", d.h., Mittel zur Vermeidung des Herausdrückens, dient die Maßgabe, daß die Dichtung 6 mit Umfangsvorspannung in ihrer Nut 5 angeordnet ist, was von vornherein außerdem zu einer dichtenden Anlage der Dichtung am Boden der Nut 10 führt und die Dichtung 6 in sich versteift. Sofern die Nut 5 für die Aufnahme einer wie in Fig.4 dargestellten einzigen, ringförmigen Dichtung 6 ausgebildet ist und dies der zu berücksichtigende Druck im Schlauch erfordert, kann am Nutboden mindestens eine kleine, umlaufende Rippe 16 oder kimmenartige Nut vorgesehen werden.

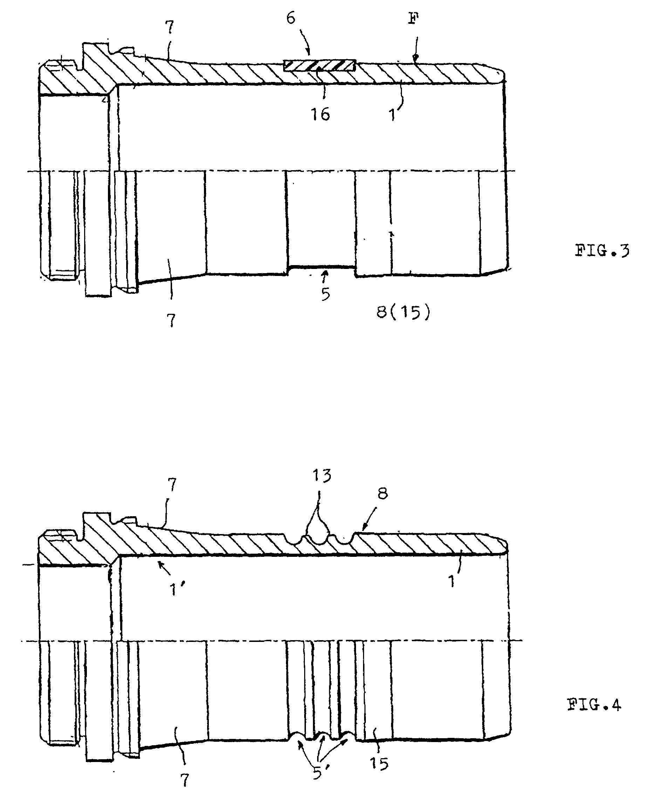

Wie insbesondere aus Fig.3,4 ersichtlich, ist der Schlauchaufschubnippel 1 mit einem Schlauchaufschubkonus 7 versehen, und zwar aus folgendem Grund:

Wie vorerwähnt, ist die Durchmesserreduzierung der Ringfeder 11 beim Festspannvorgang mit einer Axialverschiebung verbunden. Dieser Schlauchaufschubkonus 7, der nur eine geringe Neigung von wenigen Graden hat, dient dabei als fühlbarer Anschlag beim Einschieben des Schlauches S und stellt sicher, daß der Schlauch nicht voll gegen das Ende des Schlaucheinschubringraumes 4 geschoben wird, was einer axialen Fixierung des Schlauches in dieser Richtung gleichkäme und keine Axialverschiebung durch die Ringfeder 11 mehr zuließe, wenn diese von der Schraubhülse 3 axial verschoben wird. Beim einsetzenden Axialschub der Ringfeder 11 von der Schraubhülse 3 her, gleitet also die Ringfeder 11 mit ihren inneren Gangteilen nicht gegen den durch die Stützbewehrung oberflächenstrukturierten, axial festgelegten Schlauch, sondern schiebt diesen sanft auf diesen Konus 7, der im Endeffekt insoweit auch zusätzlich zur Abdichtung des Ganzen mit beiträgt, da dieser Schlauchaufschubkonus 7 zu einer weiteren Verspannung dieses Schlauchteiles gegen den Nippel 1 führt.

Um bzgl. der elastischen Dichtung 6 handelsverfügbare und zwar auch mit unterschiedlichen Härten handelserhältliche Elemente verwenden zu können, besteht, wie bereits vorerwähnt und unter Verweis auf Fig.4 eine vorteilhafte Weiterbildung darin, daß die Nut 5 in mindestens drei Nuten 5' gegliedert ist, in denen O-Ringe 12 angeordnet sind, wobei der Außendurchmesser von die Nut 5 gliedernden, sehr schmalen Stege 13 kleiner bemessen ist als der Außendurchmesser ID des Schlauchaufschubnippels 1. Auch diese Bemessung der Höhe der Stege 13 ist als wichtig zu beachten, da diese sonst bei Spannungsdeformation der 0-Ringe 12 als unnachgiebiges Widerlager für die Stützbewehrung SB wirken würden.
Derartige O-Ringe 12 bedürfen mit Rücksicht auf den Schlauchaufschub keiner besonderen, beim Einzeldichtungsring 6 gemäß Fig.3 vorzusehenden Anfasung als Mittel zur Aufschuberleichterung, da sie per se rund sind, und zweckmäßig kann dabei insbesondere für den aufschubseitigen Ring 12' gegf. ein solcher mit etwas größerer Härte vorgesehen werden, um zusätzlich dessen Herausdrücken aus seiner Nut beim Schlauchaufschub zu begegnen. Abgesehen davon dichten O-Ringe besser gegen die Nutwände ab, als das mit einer Flachdichtung in einer entsprechenden Flachnut erreichbar wäre. Auch bei der Verwendung solcher O-Ringe 12 kommt bevorzugt die Anordnung der vorerwähnten, kleinen Schlauchaufschubrampe 15 ebenfalls in Betracht (siehe Fig.6).

In diesem Zusammenhang sei darauf hingewiesen, daß man das Herausragen der Dichtung 6 an sich auch durch entsprechende Tiefenbemessung der Flachnut 5 bzw. der Nuten 5' für die O-Ringe 12 erreichen könnte. Da aber der Wandstärke des Nippels 1 wegen Aufrechterhaltung eines normgerechten freien Durchströmquerschnittes gewisse Grenzen gesetzt sind, d.h., Nuten nicht beliebig tief eingestochen werden können, wird eine solche kleine, problemlos in der Umfangsfläche F des Nippels 1 anzuordnende Aufschubrampe 15 vorgesehen.

Um die Aufschubverhältnisse und die dabei bereits erreichbare, aber noch nicht ausreichende Dichtungsanlage des Schlauches zu verdeutlichen, wird auf die extrem vergrößerte Darstellung in Fig.6 verwiesen, aus der ersichtlich ist, wie im Zehntelmillimeterbereich die Durchmesserverhältnisse in Bezug auf den genormten Innendurchmesser ID des Schlauches S der Durchmesser des Nippels 1, der Größtdurchmesser der kleinen Aufschubrampe 15 und der Außendurchmesser AD der O-Ringe 12 (gilt auch für die Dichtung 6) abgestimmt sein müssen, um einerseits einen problemlosen Aufschub des Schlauches S ohne Herausdrücken der Dichtung 6 bzw. hier der O-Ringe 12 und andererseits einen Vorandruck des Schlauches S an die O-Ringe 12 zu erreichen, von welcher Ausgangsstellung aus dann via Ringfeder 11 der eigentliche Dichtungsdruck beim Einschrauben der Schraubhülse 3 aufgebracht wird, die mit ihrer radialen Ringfläche 3' an der Ringfeder 11 anliegt.

Bezüglich der Ringfeder 11 sei noch der Vollständigkeit halber darauf hingewiesen, daß diese bzgl. ihrer Federdrahtstärke so bemessen sein muß, daß deren Gänge G bei Belastung nicht "kippen" können, d.h., für gängige Schlauchanschlußverschraubungen und Schläuche von 3/4" bis 1 1/2" hat sich dabei Edelstahlfederdraht (bei einem Gangdurchmesser von 4-5 mm) mit einer Stärke von o,6-o,8 mm als ausreichend widerstandsfähig erwiesen.

Da das am Nippel 1 festzulegende Schlauchende in die Anschlußverschraubung bzw. in den Schlaucheinschubringraum 4 bei aufgeschraubter Schraubhülse 3 eingeschoben werden kann, besteht eine vorteilhafte Weiterbildung schließlich noch darin, zwischen Anschlußteil 2 und Schraubhülse 3 eine Entschraubungssperre 17 vorzusehen, die unter Verweis auf Fig. 2 einfach aus einem dünnen, am Anschlußteil 2 umlaufenden Ringbund besteht, der umgebördelt das Außengewinde GW der Schraubhülse 3 hintergreift.

## Patentansprüche

1. Schlauchanschlußverschraubung für Saug-Druck-Schläuche, in deren elastischem Wandungsmaterial (M) eine schraubenlinienförmige Stützbewehrung (SB) aus in Bezug auf das Schlauchwandungsmaterial härterem Material eingebunden ist, bei der in Kombination
a) ein ein Schlauchaufschubnippel (1) aufweisendes Anschlußteil (2) mit einer Schraubhülse (3) einstellverschraubbar ist,
b) das Anschlußteil (2) mit Nippel (1) und die Schraubhülse (3) einen Schlaucheinschubringraum (4) begrenzen,
c) am Schlauchaufschubnippel(1) eine umlaufende Nut (5) mit elastischer, die Nippelumfangsfläche (F) geringfügig überragender Dichtung (6) angeordnet ist,
d) in Schlauchaufschubseite hinter der Nut (5) am Schlauchaufschubnippel (1) ein Schlauchaufschubkonus (7) angeordnet ist,
e) am Nippel (1) und/oder an der Dichtung (6) schlauchaufschubseitig Schlauchaufschuberleichterungen (8) angeordnet sind,
f) in einem den Schlaucheinschubringraum (4) umfassenden, vom Anschlußteil (2) und der Schraubhülse (3) begrenzten und auf einer Seite einen Innenkonus (9) aufweisenden Ringraum (10) im Bereich über der Dichtung (6) eine Ringfeder (11) angeordnet ist, die am zur Schlauchaufschubseite hin divergierenden Innenkonus (9) des Anschlußteiles (2) anliegt,
g) die Breite (B) der Dichtung (6) dem Wirkbereich der Ringfeder (11) angepaßt bemessen ist.

2. Schlauchanschlußverschraubung nach Anspruch 1,
**dadurch gekennzeichnet,**
**daß** die in der Nut (5) sitzende Dichtung (6) in dieser mit Vorspannung angeordnet ist.

3. Schlauchanschlußverschraubung nach Anspruch 1 oder 2,
**dadurch gekennzeichnet,**
**daß** die Nut (5) in mindestents drei Nuten (5') gegliedert ist, in denen O-Ringe (12) als Dichtungen angeordnet sind, wobei der Außendurchmesser von die Nut gliedernden Stegen (13) kleiner bemessen ist als der Außendurchmesser des Schlauchaufschubnippels (1).

4. Schlauchanschlußverschraubung nach Anspruch 3,
**dadurch gekennzeichnet,**
**daß** von den beiden äußeren O-Ringen (12') zumindest der schlauchaufschubseitige 0-Ring eine in Bezug auf die benachbarten Ringe größere Härte aufweist.

5. Schlauchanschlußverschraubung nach einem der Ansprüche 1 bis 4,
**dadurch gekennzeichnet,**
**daß** der Innenkonus (9) in der das schlauchaufschubnippel (1) umgebenden Hülse (4) sich gegen die Einschubseite hin öffnend angeordnet ist, daß das ringfederseitige Ende der in das Anschlußteil (2) des Schlauchaufschubippels (1) einschraubbaren Schraubhülse (3) eine radial erstreckte, ringförmige Widerlagerfläche (3') aufweist, deren Außendurchmesser etwas größer als der mittlere Durchmesser (DM) der radial unverspannten Ringfeder (11) bemessen ist.

6. Schlauchanschlußverschraubung nach einem der Ansprüche 1 bis 5,
**dadurch gekennzeichnet,**
**daß** schlauchaufschubseitig unmittelbar vor der Nut (5,5') am Schlauchaufschubnippel (1) eine umlaufende, kleine Schlauchaufschubrampe (15) als Schlauchaufschuberleichterung (8) angeordnet ist, deren Größtdurchmesser kleiner ist als der Außendurchmesser der elastischen Dichtung (6) oder der in deren Nuten (5') sitzenden O-Ringe (12).

7. Schlauchaufschubverschraubung nach einem der Ansprüche 1 bis 6,
**dadurch gekennzeichnet,**
**daß** der Anschlußteil (2) und die Schraubhülse (3) mit einer Entschraubsperre (17) versehen sind.

## Claims

1. A screwed hose coupling for suction pressure hoses into the flexible wall material (M) of which is incorporated a helically shaped reinforcement (SB) made of a material harder than the hose wall material, wherein, in combination,
a) a connecting portion (2) comprising a hose push-on nipple (1) can be adjustably screwed by a sleeve-type nut 3);
b) the connecting portion (2) including nipple (1) and the sleeve-type nut (3) confine a hose-inserting annular space (4);
c) a circumferential groove (5) with a flexible sealant (6) irrelevantly protruding the circumferential face (F) of the nipple is located on the hose push-on nipple (1);
d) a hose push-on cone (7) is arranged on the hose push-on side behind the groove (5) on the hose push-on nipple (1);
e) push-on assisting means (8) are provided on the push-on side on nipple (1) and/or on sealant (6);
f) an annular spring (11) is arranged in an annular space (10) in the area above the sealant (6) enclosing the hose-inserting annular space (4) and being confined by the connecting portion (2) and the sleeve-type nut (3) and, on one side thereof, comprising an inner cone (9), with the said annular spring (11) being in abutment with the inner cone (9) of the connecting portion (2) diverging toward the hose push-on side;
g) the width (B) of sealant (6) is dimensioned to conform to the range of action of annular spring (11).

2. A screwed hose coupling according to claim 1
**characterized in**
**that** the sealant (6) seated in the groove (5) is arranged therein with bias.

3. A screwed hose coupling according to claims 1 or 2,
**characterized in that** the groove (5) is subdivided into at least three grooves (5') wherein O-rings (12) are arranged as sealants, with the outer diameters of webs (13) subdividing the groove being dimensioned smaller than the outer diameter of the hose push-on nipple (1).

4. A screwed hose coupling according to claim 3,
**characterized in**
**that** among the two outer O-rings (12') at least the O-ring on the hose push-on side is of a greater hardness than the adjacent rings.

5. A screwed hose coupling according to any one of claims 1 through 4,
**characterized in**
**that** the inner cone (9) in the sleeve (4) surrounding the hose push-on nipple (1) is arranged to open toward the in-push side, that the end of the sleeve-type nut (3) on the annular spring side, which is screwable into the connecting portion (2) of the hose push-on nipple (1) comprises a radially extending annular abutment face (3') the outer diameter of which is slightly larger than the central diameter (DM) of the radially non-biased annular spring (11).

6. A screwed hose coupling according to any one of claims 1 through 5,
**characterized in**
**that** arranged on the hose push-on side, directly ahead of groove (5,5'), on the hose push-on nipple (1) is a circumferential small hose push-on ramp (15) forming a means (8) assisting in pushing on the hose, with the maximum diameter thereof being smaller than the outer diameter of the resilient sealant (6) or of the O-rings (12) seated in the grooves (5') thereof.

7. A screwed hose push-on means according to any one of claims 1 through 6,
**characterized in**
**that** the connecting portion (2) and the sleeve-type nut (3) are provided with an unscrewing barrier (17).

## Revendications

1. Vissage de raccord de tuyau pour des tuyaux à pression d'aspiration dans le matériau de paroi élastique (M) desquels une armature de soutien en forme d'hélice (SB) est intégrée en matériau plus dur que le matériau de paroi du tuyau pour lequel en combinaison
a) une pièce de raccord (2) qui présente un manchon fileté pour enfiler le tuyau peut être vissée de manière ajustable avec une douille à visser,
b) la pièce de raccord (2) avec le manchon fileté (1) et la douille à visser (3) délimitent un espace annulaire d'insertion de tuyau (4),
c) une rainure périphérique (5) avec une étanchéité élastique (6) qui dépasse de peu la surface périphérique du manchon fileté (F) est placée sur le manchon fileté pour enfiler le tuyau (1),
d) un cône pour enfiler le tuyau (7) est placé dans le côté pour enfiler le tuyau derrière la rainure (5) sur le manchon fileté pour enfiler le tuyau (1),
e) des moyens pour faciliter l'enfilage du tuyau (8) sont placés sur le manchon fileté (1) et/ou sur l'étanchéité (6) du côté de l'enfilage du tuyau,
f) un anneau-ressort (11) est placé dans un espace annulaire (10), qui entoure l'espace annulaire d'insertion de tuyau (4) et qui présente un cône intérieur (9) sur un côté, dans la zone au-dessus de l'étanchéité (6), anneau-ressort qui adhère au cône intérieur (9) de la pièce de raccord (2) qui diverge vers le côté d'enfilage du cône,
g) la largeur (B) de l'étanchéité (6) est dimensionnée de manière adaptée au rayon d'action de l'anneau-ressort (11).

2. Vissage de raccord de tuyau selon la revendication 1,
**caractérisé en ce**
**que** l'étanchéité (6) qui est logée dans la rainure (5) est placée dans celle-ci avec précontrainte.

3. Vissage de raccord de tuyau selon la revendication 1 ou 2,
**caractérisé en ce**
**que** la rainure (5) est divisée en au moins trois rainures (5') dans lesquelles des joints toriques (12) sont placés comme étanchéités, le diamètre extérieur de nervures (13) qui divisent la rainure étant dimensionné plus petit que le diamètre extérieur du manchon fileté pour enfiler le tuyau (1).

4. Vissage de raccord de tuyau selon la revendication 3,
**caractérisé en ce**
**que**, parmi les deux joints toriques extérieurs (12'), au moins le joint torique du côté de l'enfilage du tuyau présente une dureté plus grande que les joints voisins.

5. Vissage de raccord de tuyau selon l'une des revendications 1 à 4,
**caractérisé en ce**
**que** le cône intérieur (9) est placé dans la douille (4) qui entoure le manchon fileté pour enfiler le tuyau (1) en s'ouvrant vers le côté de l'enfilage, que l'extrémité du côté de l'anneau-resort de la douille à visser (3) qui peut être vissée dans la pièce de raccord (2) du manchon fileté pour enfiler le tuyau (1) présente une surface de contrefort annulaire qui s'étend radialement (3') dont le diamètre extérieur est dimensionné un peu plus grand que le diamètre moyen (DM) de l'anneau-ressort (11) non enserré radialement.

6. Vissage de raccord de tuyau selon l'une des revendications 1 à 5,
**caractérisé en ce**
**qu'**une petite rampe périphérique d'enfilage de tuyau (15) est placée sur le côté de l'enfilage du tuyau directement devant la rainure (5, 5') comme élément pour faciliter l'enfilage (8) dont le diamètre maximal est plus petit que le diamètre extérieur de l'étanchéité élastique (6) ou des joints toriques (12) qui sont logés dans ses rainures (5').

7. Vissage pour enfiler un tuyau selon l'une des revendications 1 à 6,
**caractérisé en**
**ce que** la pièce de raccord (2) et la douille à visser (3) sont pourvues d'un blocage de dévissage (17).
